# EUROPEAN PATENT APPLICATION

(11) **EP 2 976 945 A1**
(43) Date of publication of application: **27.01.2016**
(21) Application number: 15002113.7
(22) Date of filing: 16.07.2015
(51) Int. Cl.: A01K 27/00, B68B 1/04, B65D 63/00, D06N 3/00, D06N 3/10

(54) **SPLIT-COATED TEXTILE STRAP**

(30) Priority: 21.07.2014 HU 1400356
(71) Applicant: Sebö, Gyula, 2310 Szigetszentmiklós (HU)
(72) Inventor: Sebö, Gyula, 2310 Szigetszentmiklós (HU)

(57) **Abstract**

A split-coated textile strap (1) comprised of at least one high visibility material strip (4) and one general coating material strip (3) forming the plastic coating (2), penetrating into the fabric structure of the textile strap (1) and enclosing it, applied through a dovetail shaped material outlet (15) without mixing and infiltration. The general coating material strip (3) is non-slip and the high visibility material strip (4) having lower light-absorbing capability preferably contains fluorescent (17) and/or phosphorescent pigments (7). During the extrusion the high visibility material strip (4) is applied first, then the general coating material strip (3) enclosing it.

## Description

The invention relates to a split-coated textile strap for leading primarily household pets - dogs, horses -, comprising at least one layer of preferably textile strap shaped fabric containing synthetic-based fibres, and having a plastic coating with a thickness of 1-3 mm, covering 100% of its surface, wherein the coating is comprised of at least two kinds of light-absorbing material strips applied to the surface of the split-coated textile strap by coextrusion technology, delimited from each other.

In everyday life and in the special field of working dogs, as well as in leading horses, the stability, high load-bearing capacity, and last but not least high visibility of lunges and leashes is of primary concern. The presence of certain animals in public transport also increases the emphasis on safety in the development of equipment. For securing a companion animal in the car, for example, the load-bearing capacity or rating (determined by tensile testing) of the used equipment is of utmost importance. The use of undersized equipment increases the risk of accidents, because the owner of the animal acts in the belief that the animal is safe in the event of braking, or tugging the leash. Restrictions are expected worldwide with respect to the participation of dogs in public transport or the deployment of service dogs, as those involved want to reduce the risk of accidents to a minimum. With the relegation of leather to the background, synthetic materials have gained ground in dog and horse training as well.

The use of textile straps have raised a number of factors that make their use disadvantageous. These include moisture absorption, abrasion, getting frayed, getting dirty, and cleanability. Therefore the use of plastic-coated textile straps has come to the fore. As a result, the already used strap materials have received an at least 1 mm thick, abrasion and UV resistant, colourfast, plastic-containing (TPE, PVC, rubber, etc.) coating, which in addition to being pleasant to the touch, allows easy cleaning. In order to ensure high visibility, fluorescent or phosphorescent pigments are also used in the coating. The following inventions provide teachings on the processing of plastics in a similar manner:

Utility model No. US 5,063,615 discloses a coextruded plastic belt strap, wherein a thin plastic layer equal to 1/5th and a thick plastic layer equal to 4/5th of the total thickness are extruded together. An adhesion promoting film layer is placed between them.

A disadvantage of the utility model is that its elongation is not limited by a textile strap. With the omission of the textile strap, in view of the elongation the required thickness of the plastic layers is too high, if it is intended to be used for leading animals. In the case of this invention high visibility is not provided. The application of an adhesion promoting film layer is an additional cost and a potential source of error.

Another solution is presented in utility model No. WO 2010122978 A1 disclosing a rubber composition for a conveyor belt. According to the utility model a galvanized steel cord covered with an adhesive rubber layer is interposed between cover rubber layers. The top layer of the conveyor belt is a rubber composition which excels in durability and productivity, furthermore the rubber used for the conveyor belt can be easily shaped and formed. The solution disclosed in the utility model cannot be used for animal equipment, as steel cords cannot be widely used in animal equipment, and rubber can be used in dog leashes only as an additive, or as thin fibres woven into a textile strap. Otherwise the weight of the equipment would be disproportionately high. In the case of rubber-based high visibility equipment the use of phosphorescent or fluorescent additives is impractical because of their low efficiency.

Utility model No. DE 10 2006 025 562 A1 discloses a transmission belt made of an elastic material with an embedded tension-bearing layer, wherein the tension-bearing layer consists of at least one layer of plastic film made of a material with high tensile strength and low elongation. Preferably, the outer plastic layer has a non-slip and textured surface. The utility model discloses many possible compositions for the plastic film. Among other things, it mentions the embedding of a fabric layer made of polyester or polyamide fibres, or a combination thereof.

A shortcoming of the prior art is that the high visibility function is not kept sufficiently in mind. The utility model does not allow the application of material strips of different material composition to the tension-bearing layer, textile strap.

In the prior art there are numerous known fluorescent and/or phosphorescent pigment-containing plastic- and/or rubber-coated textile straps. Their task is, in addition to aesthetic benefits, to ensure high visibility.

Utility model No. U1000189 is a strap or cord-shaped phosphorescent dog collar with a phosphorescent plastic coating covering 91-100% of its surface. In the utility model the coating is not comprised of material strip portions. Making the whole coating phosphorescent is a disadvantage because of the considerable cost of the phosphorescent additive. In daylight the equipment is not noticeable; not distinct from other plastic-coated straps. The utility model does not allow the addition of non-slip additives, ground rubber, without significantly reducing the phosphorescent ability. The coating is not split, divided into strips. The production technology is not detailed, thus the adhesion of the coating to the textile strap is not known.

The prior art does not include a textile strap for leading primarily companion animals, having a split plastic coating comprised of contoured material strips, preferably with a high visibility function and made with a non-slip additive, in a specific technology sequence, by a production technology including a special guide channel and head design.

With the utility model the task is to develop a split-coated textile strap, the plastic coating of which is comprised of contoured material strips of different light-absorbing capabilities, not mixing with each other and different to the touch.

The task is to highlight the preferably high visibility material strip having lower light-absorbing capability, to maximize the effectiveness of the fluorescent and/or phosphorescent pigments by determining the sequence of application of the material strips, through the special, e.g. dovetail design of the material inlet, and the position of the inlet openings.

Furthermore, the task is to develop equipment having rounded edges fitting into the hand, with embossed graphic elements on its surface to facilitate gripping.

The task is to develop a non-slip surface and/or material for the general coating material strip with an additive, for example ground rubber.

Furthermore, the task is to ensure the secure adhesion of the coating to the textile strap by means of incorporating synthetic fibres with a melting point equal to or lower than that of the coating into the textile strap.

The aim of the invention is to develop a split-coated textile strap with high load-bearing capacity, suitable for leading companion animals, wherein the individual material strips forming the coating are applied to the textile strap without mixing, delimited from each other in their full thickness.

The aim is to have a fluorescent and/or phosphorescent high visibility material strip, without having its colour, luminous capacity ruined by the general coating material strip.

The alternation, number and/or colour of the strip elements can be indicative of the load-bearing capacity or other mechanical properties, making them suitable for distinction.

Furthermore, the aim is to provide the strip elements having high light-absorbing capability with a non-slip function, by making the strip element of a plastic mixed with ground rubber or other additives, for example. The aim is to ensure that the high visibility material strip provided with a high visibility function, slippery under wet conditions, is not mixed with the general coating material strip containing the ground rubber or non-slip additive, and its luminous capacity is not ruined.

The aim is to develop repeated embossed graphic elements on the surface of the coating.

Furthermore, the aim is to maximize the adhesion of the plastic coating to the textile strap, to develop a plastic coating uniformly spreading over, filling the surface of the fabric structure of the textile strap. When base materials of different melting points woven into the textile fabric are used, some fibres with a melting point equal to or lower than that of the coating melt together with the coating. The aim is to eliminate the application of an adhesion layer generally used in coextrusion between the textile strap and the coating.

The aim of the production technology of the split-coated textile strap is to determine the sequence of the application of the different, general coating material strip(s) and high visibility material strip(s) to the textile strap, that is the priority in time of the high visibility material strip over the general coating material strip adjacent to it and/or finally enclosing the textile strap.

The aim is to prevent the general coating material strip from infiltrating into the high visibility material strip, to maximize the effectiveness of the phosphorescent and fluorescent pigments.

The aim is to apply the materials simultaneously on both sides of the textile strap, in order to support it. The aim is to stabilize the textile strap and thereby the material strips on the textile strap, for example by applying a material strip on the opposite side simultaneously with the high visibility material strip running along the axis line.

The aim is to develop a coating having rounded edges fitting into the hand.

The invention is based on the recognition that safety in terms of both load-bearing capacity and high visibility is of utmost importance both in everyday life and in the case of leading companion animals trained for special work on a leash. The material strips of the plastic coating are suitable for distinctively indicating the load-bearing capacity, which can be indispensable or in many cases even statutorily required for service dog and horse accessories. Dog and horse harnesses, lunges, collars and leashes equipped with combined strip portions provided with a high visibility function (phosphorescent and fluorescent) ensure noticeability even in total darkness. Adding a non-slip additive and/or ground rubber to the strip portions having high light-absorbing capability, without mixing with the high visibility material strips, further increases the usability of the equipment.

Thus the invention relates to a split-coated textile strap for leading primarily household pets - dogs, horses -, comprising at least one layer of preferably textile strap shaped fabric containing synthetic-based fibres, and having a plastic coating with a thickness of 1-3 mm, covering 100% of its surface, wherein the coating is comprised of at least two kinds of light-absorbing material strips applied to the surface of the split-coated textile strap by coextrusion technology, delimited from each other.

The essence of the development is that the plastic coating is comprised of at least one general coating material strip and one high visibility material strip having lower light absorbing capability, which are applied to the textile strap without mixing with each other and infiltration, filling the surface of the fabric structure of the textile strap, furthermore the plastic coating has rounded edges on both sides.

Preferably, at least the high visibility material strip is fluorescent.

The general coating material strip and the high visibility material strip are symmetrically arranged along the axis line.

The high visibility material strip contains phosphorescent pigments.

At least the general coating material strip contains ground rubber.

The essence of the development is that at least one general coating material strip and at least one high visibility material strip, having lower light-absorbing capability than the general coating material strip and containing fluorescent pigments, is applied to the surface of the textile strap to form a contoured, but continuous plastic coating without mixing and infiltration, furthermore first at least one material strip forming the plastic coating is applied simultaneously to each side of the textile strap, furthermore from a general coating material strip and a high visibility material strip coming into contact with each other, always the high visibility material strip is applied first to the textile strap.

Each strip portion is applied to the textile strap directly, filling the surface thereof.

The material strips are applied to the textile strap through at least one dovetail shaped channel outlet.

The invention is illustrated in the following figures.
- Figure 1 shows an A-A cross-sectional view of the split-coated textile strap.
- Figure 2 shows a top view of the extruder head with open die cover.
- Figure 3 shows a B-B cross-sectional side view of the textile strap led through the extruder head and the dovetail shaped channel outlet, and the application of the plastic coating.
- Figure 4 shows a C-C cross-sectional view of the extruder head.

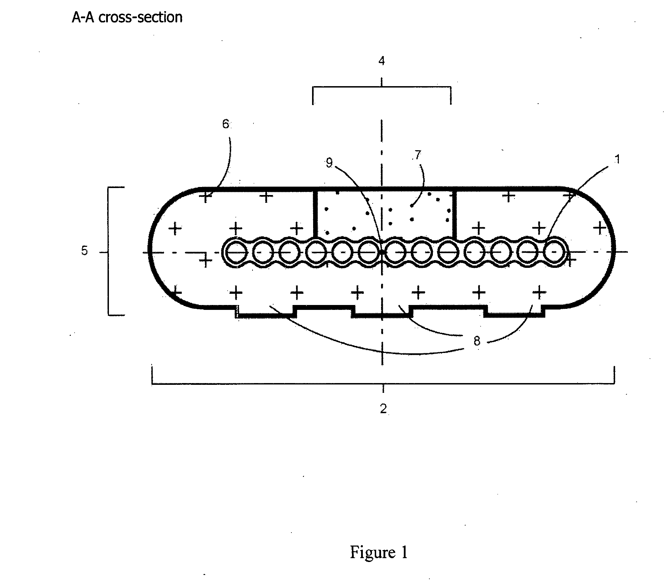

Figure 1 shows an A-A cross-sectional view of the plastic coating 2 penetrating into the surface of the fabric structure of the textile strap 1, delimited to symmetric strip portions along the axis line 9. It is clearly shown that the high visibility strip portion 4 and the general coating material strip 3 are extruded directly on the textile strap 1 without mixing and infiltration, delimited from each other. At least the general coating material strip 3 contains a non-slip and/or ground rubber additive 6. The at least one high visibility material strip 4 running along the axis line 9 preferably contains phosphorescent pigments 7.

Embossed graphic elements are developed on the surface of the plastic coating 2. The rounded edges 5 facilitate fitting into the hand comfortably.

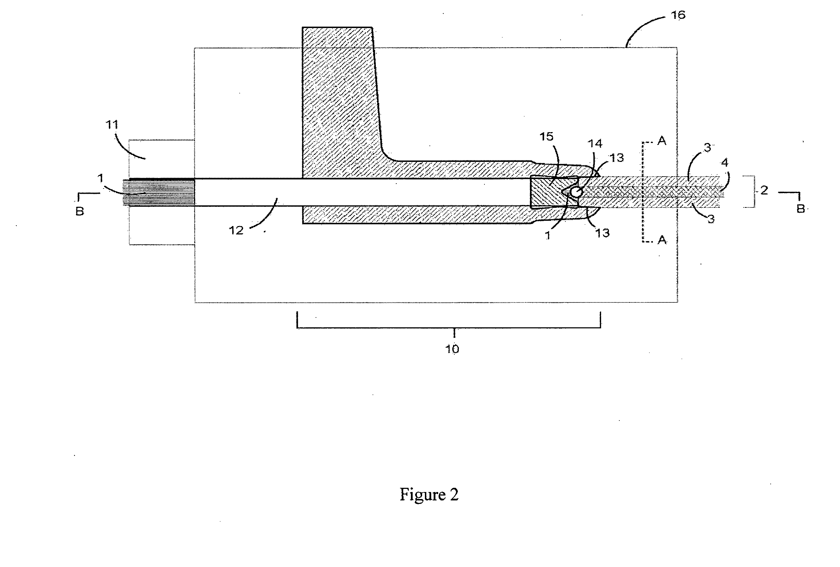

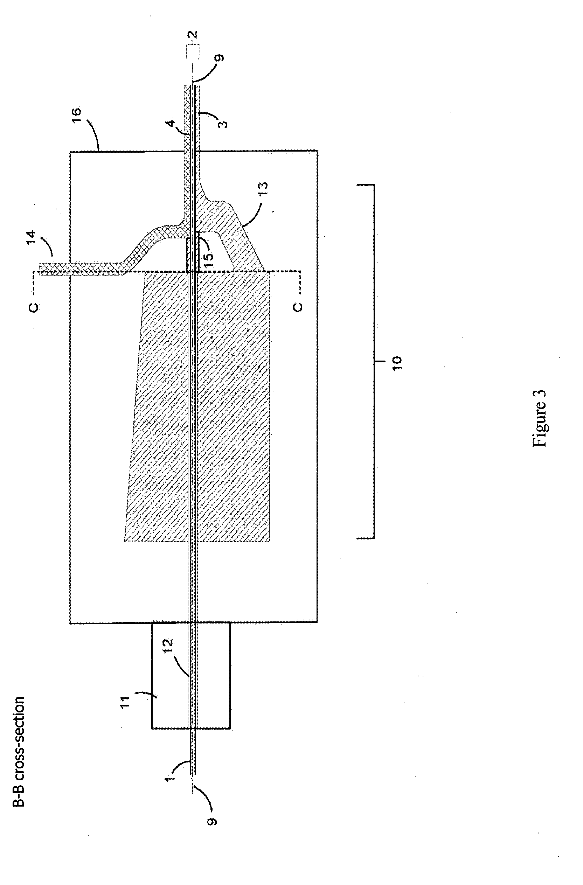

Figure 2 shows a top view with open die cover 16, while Figure 3 shows a B-B cross-sectional side view of the extruder head 10. The textile strap 1 is led to the preheater 11 through the strap guide channel 12. Then the textile strap 1 heated to the desired temperature in the preheater 11 is led between the general coating material inlet 13 and the coextruder material inlet 14. First the plastic coating 2 is applied simultaneously through the coextruder material inlet 14 and a general coating material inlet 13 on the other, opposite side of the textile strap 1, in order to support it. The advantage of applying the material on both sides, only partially enclosing the textile strap 1, is that the high visibility material strip 4 and the textile strap 1 are stabilized, and the material strips are applied without mixing. From material strips coming into contact with each other, always the high visibility material strip 4 is applied first, otherwise the general coating material strip 3 can infiltrate between the textile strap 1 and the adjacent high visibility material strip 4, adversely affecting the colour and fluorescent and/or phosphorescent ability thereof. The plastic coating 2 is applied to the textile strap 1 through at least one dovetail shaped channel outlet 15. The number of dovetail shaped channel outlets 15 depends on the number of material strips.

The plastic coating 2 is thermoplastic elastomer-based, and has a uniform thickness of preferably 1-3 mm on both sides of the axis line 9 according to Figure 3.

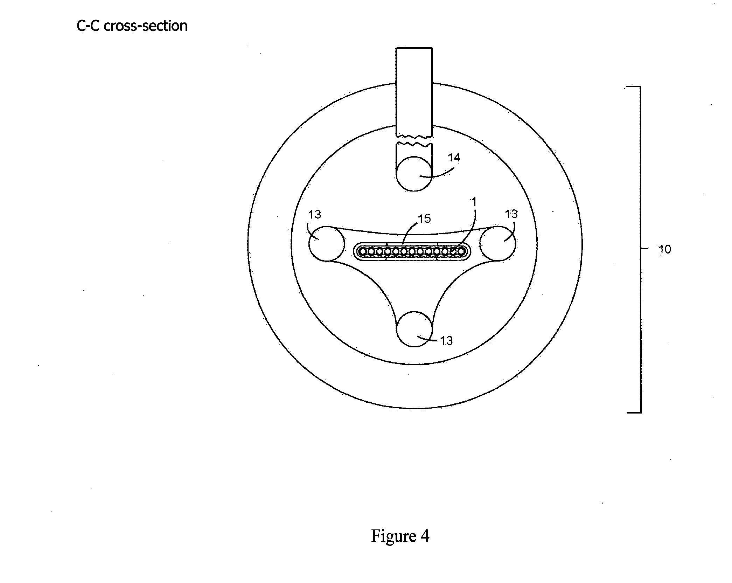

Figure 4 shows a C-C cross-sectional view of the extruder head 10. Here at least four material inlet openings are shown, from which in this particular case three are general coating material inlets 13 and one is a coextruder material inlet 14. The general coating material inlet 13 opposite to the coextruder material inlet 14 plays a role in supporting the textile strap 1, and allows the application of the high visibility material strip 4 with the given extruder head 10 and through the dovetail shaped channel outlet 15 as shown in Figure 1. The dovetail shaped channel outlet 15 encloses the textile strap 1.

Thus the invention relates to a split-coated textile strap for leading primarily household pets - dogs, horses -, comprising at least one layer of preferably textile strap shaped fabric containing synthetic-based fibres, and having a plastic coating with a thickness of 1-3 mm, covering 100% of its surface, wherein the coating is comprised of at least two kinds of light-absorbing material strips applied to the surface of the split-coated textile strap by coextrusion technology, delimited from each other.

The plastic coating of the split-coated textile strap is divided into strip portions without infiltration. Thereby the effectiveness of the colour and fluorescent and/or phosphorescent ability of the high visibility strip portion is maximized. The rounded edges make the split-coated textile strap suitable for leading farm or companion animals by hand. Secure grip in the hand is ensured by the non-slip and/or ground rubber additive added to the general coating material.

### List of reference numbers

1. textile strap
2. plastic coating
3. general coating material strip
4. high visibility material strip
5. rounded edge
6. ground rubber
7. phosphorescent pigment
8. embossed graphic element
9. axis line
10. extruder head
11. preheater
12. strap guide channel
13. general coating material inlet
14. coextruder material inlet
15. dovetail shaped channel outlet
16. die cover
17. fluorescent pigment

## Claims

1. A split-coated textile strap equipped with a plastic coating, for leading primarily household pets - dogs, horses -, comprising at least one layer of preferably textile strap shaped fabric containing synthetic-based fibres, and having a plastic coating with a thickness of 1-3 mm, covering 100% of its surface, wherein the coating is comprised of at least two kinds of light-absorbing material strips applied to the surface of the split-coated textile strap by coextrusion technology, delimited from each other, **characterized in that** the plastic coating is comprised of at least one general coating material strip (3) and at least one high visibility material strip (4) having lower light-absorbing capability, which are applied to the textile strap (1) without mixing with each other and infiltration, filling the surface of the fabric structure of the textile strap (1), furthermore the plastic coating (2) has rounded edges (5) on both sides.

2. The split-coated textile strap (1) according to claim 1, **characterized in that** at least the high visibility material strip (4) is fluorescent.

3. The split-coated textile strap (1) according to claims 1 and 2, **characterized in that** the general coating material strip (3) and the high visibility material strip (4) are symmetrically arranged along the axis line (9).

4. The split-coated textile strap (1) according to claims 1-3, **characterized in that** the high visibility material strip (4) contains phosphorescent pigments (7).

5. The split-coated textile strap (1) according to claims 1-4, **characterized in that** at least the general coating material strip (3) contains ground rubber (6).

6. A method for making a split-coated textile strap, **characterized in that** at least one general coating material strip (3) and at least one high visibility material strip (4), having lower light-absorbing capability than the general coating material strip (3) and containing fluorescent pigments (17), is applied to surface of the textile strap (1) to form a contoured, but continuous plastic coating (2) without mixing, furthermore first at least one material strip forming the plastic coating (2) is applied simultaneously to each side of the textile strap (1), furthermore from a general coating material strip (3) and an adjacent high visibility material strip (4) always the high visibility material strip is applied first to the textile strap (1).

7. The method according to claim 6, **characterized in that** the general coating material strip (3) and the high visibility material strip (4) of the split-coated textile strap (1) are applied to the textile strap (1) directly, filling the surface thereof.

8. The method according to claims 6 and 7, **characterized in that** the general coating material strip (3) and the high visibility material strip (4) of the split-coated textile strap (1) are applied to the textile strap (1) through at least one dovetail shaped channel outlet (15), separated by it.
